**Europäisches Patentamt**

**European Patent Office**

**Office européen des brevets**

(19)

(11) Veröffentlichungsnummer: **0 006 426**
**A1**

(12) **EUROPÄISCHE PATENTANMELDUNG**

(21) Anmeldenummer: **79101192.7**

(22) Anmeldetag: **19.04.79**

(51) Int. Cl.³: **G 01 H 1/04**, G 21 C 17/00

(30) Priorität: **29.06.78 DE 2828541**

(43) Veröffentlichungstag der Anmeldung: **09.01.80**
**Patentblatt 80/1**

(84) Benannte Vertragsstaaten: **BE DE FR GB IT NL**

(71) Anmelder: **INTERATOM Internationale Atomreaktorbau GmbH, c/o Siemens AG Postfach 261, D-8000 München 22 (DE)**

(72) Erfinder: **Schnapp, Herbert, Mendener Strasse 26, D-5205 St.Augustin I Mülldorf (DE)**

(54) **Vorrichtung zur Schwingungsmessung.**

(57) Eine Vorrichtung zur Schwingungsmessung, z.B. an Bauteilen von Kernreaktoren, die fernbedienbar und dadurch auch an schlecht zugänglichen Stellen einsetzbar ist, indem die Schwingungsaufnehmer (3) in einem Rohr (8) gelagert an ihren Einsatzort gebracht werden. Um den störenden Einfluss dieser Hilfskonstruktion auf die Messgenauigkeit auszuschalten, werden nach erfolgter Positionierung alle starren Verbindungen zu den Messgeräten (3) gelöst, die sich mit Hilfe einer Feder (7) gegen die zu messenden Bauteile (1) selbsttätig verspannen.

EP 0 006 426 A1

INTERATOM                                    VPA 78 P 8535 EUR
Internationale Atomreaktorbau GmbH
5060 Bergisch Gladbach 1


Vorrichtung zur Schwingungsmessung

Die vorliegende Erfindung betrifft eine fernhandhabbare Schwingungsmeßvorrichtung nach dem Oberbegriff des 1. Anspruchs, die besonders für den Einsatz an schwer zugänglichen Orten geeignet ist. So werden zum Nachweis der Betriebssicherheit von Kernreaktoren u. a. Schwingungsmessungen an einer Reihe von Stellen, z. B. an den Kühlmittelein- und -austrittsleitungen gefordert, die zwar vor der Inbetriebnahme und daher nicht strahlungsbelastet, aber doch bei fertig montierter Anlage vorgenommen werden müssen. Die für die Messung ausgewählten und z. B. durch die Herrichtung geeigneter Anlageflächen für die Meßgeräte vorbereiteten Meßorte sind dabei vielfach nur mit Hilfe sogenannter Meßlanzen erreichbar, in deren Kopf die Meßgeräte angeordnet sind und die durch entsprechende Kanäle, Lücken oder dgl. hindurchgeführt werden. Die Anwendung der Erfindung ist jedoch nicht auf diesen als beispielhaft angeführten Einsatz beschränkt.

23.06.1978 We/Fe

Das Ergebnis der Schwingungsmessung an einem Bauteil wird naturgemäß dadurch verfälscht, daß die Schwingungseigenschaften des Bauteils durch das an ihm anliegende Meßgerät selbst beeinflußt werden. Diesen nachteiligen Einfluß kann man dadurch vernachlässigbar klein machen, daß die Masse des Meßgerätes klein gegenüber derjenigen des Bauteils gehalten wird, was jedoch auf Schwierigkeiten stößt, wenn zu ersterer noch die Masse der Handhabungsvorrichtung, d.h., der Meßlanze hinzugerechnet werden muß.

Aufgabe der vorliegenden Erfindung ist eine fernhandhabbare Vorrichtung zur Schwingungsmessung, die sicher positioniert werden kann und deren mitschwingende Masse so gering wie möglich gehalten wird. Dadurch wird bei hohen Frequenzen die zur Anpressung des Meßgerätes erforderliche Federkraft sehr gering gehalten.

Die Lösung dieser Aufgabe erfolgt durch die im kennzeichnenden Teil des 1. Anspruchs vorgeschlagenen Mittel. Unter den "unstarren Verbindungen" sind dabei in erster Linie Kabel für die Energiezufuhr an die Meßgeräte und die Ableitung der gewonnenen Meßdaten an Anzeigegeräte, Speicher usw. zu verstehen, die mit Rücksicht auf die erstrebte Geringhaltung der mitschwingenden Masse des Meßgerätes von diesem getrennt angeordnet werden. Diese Masse wird dadurch, daß die Handhabungsvorrichtung für die Dauer des Meßvorganges von dem eigentlichen Meßgerät schwingungstechnisch abgekoppelt wird, auf das geringstmögliche Maß reduziert.
Eine Ausgestaltung dieses Erfindungsgedankens wird im 2. Anspruch vorgeschlagen. Die Fixierung der Meßgeräte am Meßort mittels Federkraft ist sowohl mit Rücksicht auf deren Montage und Demontage als auch mit Rücksicht auf den erforderlichen Aufwand an am Bauteil vorzusehenden Hilfseinrichtungen am günstigsten. Stützt sich die Vorrichtung dabei mit je einem Meßgerät auf verschiedenen Bauteilen ab, können diese in einem Arbeitsgang vermessen werden.

Die im 3. Anspruch vorgeschlagenen Mittel dienen dazu, den Ein- und Ausbau der Meßgeräte am Meßort auf einfache Weise fernbedient ausführbar zu machen.

Es ist besonders nützlich, zwei oder mehr Meßgeräte in einer Vorrichtung zusammenzufassen und sich an einander gegenüberliegenden Teilen desselben Bauteils abstützen zu lassen, wenn, wie im 4. Anspruch vorgeschlagen, die einzelnen Meßgeräte zur Aufnahme von Schwingungen in verschiedenen Richtungen eingerichtet sind, beispielsweise bei drei Geräten in der X-, Y- und Z-Richtung.

Ein Ausführungsbeispiel der Erfindung ist in der Zeichnung dargestellt, und zwar zeigt

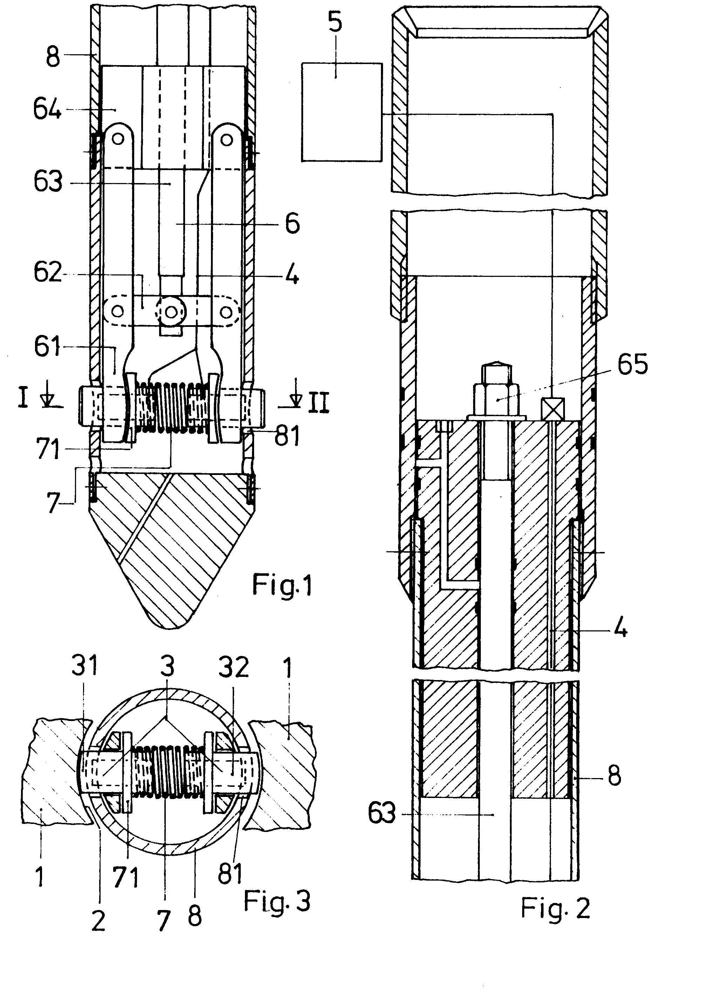

Figur 1 den unteren und

Figur 2 den oberen Teil eines Axiallängsschnittes, sowie
Figur 3 einen Querschnitt entsprechend der Linie I - II.

In einem beliebigen und nicht näher beschriebenen Bauteil 1, dessen Schwingungsverhalten untersucht werden soll, ist z. B. ein zylindrischer Kanal 2 angelegt, in den wie hier dargestellt, eine entsprechende Meßvorrichtung eingeführt werden kann. Diese besteht aus zwei Meßgeräten 3, jedes bestehend aus einem Spannstück 31 und dem eigentlichen Beschleunigungsaufnehmer 32, der in ersterem angeordnet ist. Dieser ist über ein Kabel 4 mit einem an einem zugänglichen Ort aufgestellten Anzeigegerät 5, beispielsweise einem Oszillographen verbunden (hier nur schematisch angedeutet). In den Kanal 2, der sich an einem anders nicht zugänglichen Ort befindet, werden die Meßgeräte 3 mittels einer rohrförmigen Meßlanze 8 größerer Länge gebracht, die quer zu ihrer Längsachse mit zwei Öffnungen 81 versehen ist, durch die die Spannstücke 31 nach außen über den Umriß der Meßlanze 8 hinaustreten können und, wie hier dargestellt, an einander gegenüberliegenden Seiten des Kanals 2 anliegend sich gegenseitig so verspannen, daß die Meßgeräte 3 auch ohne weitere Befestigung in ihrer Lage verharren, wenn ihre Verbindung zur Meßlanze 8 gelöst wird. Dies geschieht durch die Kraft einer Spiralfeder 7, die sich innen an Widerlagern 71 abstützt, die an jedes der Spannstücke 31 angeformt sind. Da das Kabel 4 unstarr ist, wird eine Schwingungsmessung am Bauteil 1 lediglich durch die zusätzliche Masse der beiden Meßgeräte 3 und der Feder 7 beeinflußt. Dabei kann eines der Meßgeräte z. B. Schwingungen in radialer, und das andere in axialer Richtung, auf den Kanal 2 bezogen, aufnehmen.

Ist die Messung beendet und sollen die Meßgeräte 3 aus dem Kanal 2 entfernt werden, wird die Feder 7 mit Hilfe einer Spannvorrichtung 6 so weit zusammengedrückt, daß die Spannstücke 31 Lose bekommen und ggf. in die Meßlanze 8 zurücktreten können. Die Spannvorrichtung 6 besteht im einzelnen aus zwei außen auf die Widerlager 71 drückenden Klauen 61, die gelenkig an einem Flansch 64 im Inneren der Meßlanze 8 angebracht sind; ebenfalls gelenkig greifen an den Klauen 61 je ein Hebel 62 an, die an ihrem anderen Ende an einer Zugstange 63 angelenkt sind, die in der Meßlanze 8 nach oben geführt ist. Am oberen Ende ist sie mit einem Gewinde versehen, auf dem eine Stellmutter 65 gedreht werden kann; wird diese beispielsweise rechtsherum gedreht, wird die Zugstange 63 nach oben gezogen und die Hebel 62 werden ausgelenkt derart, daß sie die Klauen 61 an die Widerlager 71 pressen und so die Feder 7 zusammendrücken.

INTERATOM

Internationale Atomreaktorbau GmbH

5060 Bergisch Gladbach 1


Vorrichtung zur Schwingungsmessung


Schutzansprüche


1. Vorrichtung zur Schwingungsmessung an Bauteilen mit mindestens einem unter Federdruck an der Meßstelle anliegenden Meßgerät mit Handhabungsvorrichtung, dadurch g e k e n n z e i c h n e t , daß das Meßgerät (3) für die Dauer des Meßvorganges von der Handhabungsvorrichtung (8) bis auf unstarre Verbindungen (4) trennbar und mit Mitteln (31, 7) zur Fixierung seiner Lage versehen ist.


2. Vorrichtung nach Anspruch 1, dadurch g e k e n n z e i c h n e t , daß sie zwei oder mehr durch Federkraft (7) auseinandergedrückte, sich an jeweils gegenüberliegenden Stellen des oder der Bauteile (1) abstützende Meßgeräte (3) oder andere Teile aufweist.


23.06.1978 We/Fe

0006426

- 2 -    VPA 78 P 8535 EUR

3. Vorrichtung nach Anspruch 1 oder 2, dadurch g e - k e n n z e i c h n e t , daß die Handhabungsvor- richtung (8) Mittel (6) zum Spannen der das oder die Meßgeräte (3) beaufschlagenden Feder (7) aufweist.

4. Vorrichtung nach Anspruch 2 oder 3, dadurch g e - k e n n z e i c h n e t , daß die zwei oder mehr Meßgeräte (3) zur Messung von Schwingungen in jeweils unterschiedlicher Richtung eingerichtet sind.

Fig.1

Fig. 3

Fig. 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 391 176 (THE ENGLISH ELECTRIC CO. LTD.) <br> * Seite 1, rechte Spalte, Zeilen 7-13 * | 1 |
| A | US - A - 3 225 294 (R.W. McCLUNG et al.) <br> * Bild 3; Spalte 2, Zeilen 26-52 * | 1 |
| A | US - A - 4 030 202 (M.F.A. FADL et al.) <br> * Zusammenfassung; Bilder 3,4 * | 1 |
| A | CH - A - 429 202 (KARLHEINZ HIRSCHMANN) <br> * Bilder 1,2; Spalte 2, Zeilen 18-39 * | 1 |

**KLASSIFIKATION DER ANMELDUNG (Int.Cl.³)**

G 01 H 1/04
G 21 C 17/00

**RECHERCHIERTE SACHGEBIETE (Int. Cl.²)**

G 01 H 1/04
1/08
G 21 C 17/00
G 01 V 1/40
G 01 B 7/12
5/12
E 21 B 47/00
47/09
17/10

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort <br> Den Haag | Abschlußdatum der Recherche <br> 06-10-1979 | Prüfer <br> BIGGIO |
|---|---|---|

EPA form 1503.1 06.78